# EUROPÄISCHE PATENTANMELDUNG

(11) **EP 1 362 732 A1**
(43) Veröffentlichungstag der Anmeldung: **19.11.2003**
(21) Anmeldenummer: 03010164.6
(22) Anmeldetag: 06.05.2003
(51) Int. Cl.: B60K 11/08, F01P 7/12, B60T 5/00, F01N 3/20

(54) **Betätigungseinrichtung für eine Luftsteuerklappe**

(30) Priorität: 18.05.2002 DE 10222320
(71) Anmelder: Bayerische Motoren Werke Aktiengesellschaft, 80809 München (DE)
(72) Erfinder: Engelmann, Jürgen, 81739 München (DE)

(57) **Zusammenfassung**

Einrichtung zur Betätigung zumindest einer Steuerklappe zur Steuerung eines Luftstromes bei einem Kraftfahrzeug mittels eines eine Formgedächtnislegierung umfassenden Aktuators.

## Beschreibung

Die Erfindung betrifft eine Betätigungseinrichtung für eine Luftsteuerklappe bei einem Kraftfahrzeug.

Luftsteuerklappen werden bei Kraftfahrzeugen beispielsweise häufig zur Steuerung eines durch einen aktiv mittels eines Lüfters erzeugten und/oder passiv fahrtwindbedingten Kühlluftstromes verwendet. Der aktiv erzeugte Anteil eines Luftstromes ist dabei auch durch eine entsprechende Steuerung des Lüfters steuerbar, um jedoch den passiven, fahrtwindabhängigen Luftstrom zu steuern, sind Luftsteuerklappen notwendig.

Die Steuerung insbesondere der passiven Kühlluftströme bei Kraftfahrzeugen erfolgt vor dem Hintergrund, einerseits eine ausreichende Kühlung sicherzustellen und andererseits - wenn ein Kühlluftstrom nicht erforderlich ist - den Luftwiderstand des Fahrzeuges niedrig zu halten.

Die DE 39 42 010 C2 beispielsweise betrifft eine Vorrichtung zum Steuern zumindest einer Kühlluft-Klappe an der Frontpartie eines Kraftfahrzeuges, die abhängig von der an ihr wirkenden Druckdifferenz ab einer definierten Geschwindigkeit des Kraftfahrzeuges und/oder abhängig von der Temperatur der Brennkraftmaschine öffnet. Gemäß der DE 39 42 010 C2 erfolgt eine Steuerung, indem die Klappe in ihrer Schließstellung unmittelbar durch eine Haltekraft gehalten ist, welche beispielsweise mittels eines steuerbaren Elektromagneten aufgebracht wird. Die beschriebene Steuerung ermöglicht lediglich die Steuerung des Öffnungszeitpunktes, eine geöffnete Klappe kann nicht gesteuert geschlossen werden, vielmehr muss abgewartet werden, bis die Klappe selbstständig - beispielsweise bedingt durch eine Klappenlagerung außerhalb deren Schwerpunktes - schließt, bevor eine erneute Aktivierung der Haltekraft erfolgen kann; während der gesamten Haltezeit muss der Elektromagnet ununterbrochen bestromt sein, so dassein beträchtlicher Energieeinsatz notwendig ist. Darüber hinaus wird auch das Öffnen lediglich passiv durch Lösen der Haltekraft erreicht, ein aktives Öffnen mittels eines Aktuators ist nicht vorgesehen. Insgesamt ergibt sich daher eine nur geringe Steuerungsmöglichkeit, welche höheren Anforderungen nicht genügt.

Ein weiteres Anwendungsgebiet von Luftsteuerklappen betrifft die Temperierung von Katalysatoren. In diesem Zusammenhang beschreibt die DE 41 27 634 A1 ausgehend von der DE-PS 22 22 498, welche den grundlegenden Gedanken einer Temperaturregeleinrichtung für einen Abgaskatalysator eines Kraftfahrzeuges mittels einer elektromotorisch betätigten Schwenkklappe offenbart, eine wesentlich verbesserte Anordnung mit einem bis zum Endrohr der Abgasanlage geführten Kühlluftrohr, welches mit diesem eine Saugstrahlpumpe bildet, die Eintrittsöffnung ist von einer elektromotorisch betätigten Klappe verschließbar.

Insbesondere NO_{X}-Speicherkatalysatoren erreichen ausreichend hohe Konvertierungsraten nur in einem schmalen Abgastemperaturfenster, wodurch der den Wirkungsgrad steigernde Magerbetriebsbereich der Brennkraftmaschine stark begrenzt wird; eine diesbezügliche Optimierung beschreibt die DE 199 48 148 A1. Im Fahrzeug ist dazu ein Luftleitschacht angeordnet, der in einem Bereich der Front des Kraftfahrzeuges eine Eintrittsöffnung aufweist und dessen Ende auf den Abgaskrümmer und/oder einen speziellen Abgaskühler gerichtet ist und der im Bereich der Eintrittsöffnung mit einer steuerbaren Schaltklappe versehen sein kann.

Bei den Klappensteuerungen zur Abgas- bzw. Katalysatortemperierung im Stand der Technik erfolgt die Betätigung der Klappe elektromotorisch. In der Regel sind daher zusätzlich Getriebe in der kinematischen Kette zwischen Motor und Klappe notwendig, insbesondere, wenn eine Selbsthemmung der Klappenbewegung gewünscht ist, so dass beispielsweise Staudruckkräfte bei Fahrt die Klappe nicht verstellen bzw. keine zusätzliche Haltekraft aufgebracht werden muss. Aufgrund dessen sind die bekannten Betätigungseinrichtungen sehr aufwändig, teuer und erfordern eine großen Bauraum.

Aufgabe der Erfindung ist es, eine Betätigungseinrichtung für eine Luftsteuerklappe bereitzustellen, welche unter Vermeidung der genannten Nachteile ein Steuern sowohl der Öffnungs- als auch der Schließbewegung sowie eine Feststellung in den Endlagen ohne große Leistungsaufnahme ermöglicht, die Einrichtung soll ein wesentlich verbessertes Verhältnis von Betätigungskraft/-weg zu Baugröße/Gewicht aufweisen.

Die Lösung der Aufgabe erfolgt mit einer Einrichtung gemäß den Merkmalen des Anspruchs 1, wobei zur Betätigung zumindest einer Steuerklappe zur Steuerung eines Luftstromes bei einem Kraftfahrzeug ein eine Formgedächtnislegierung umfassender Aktuator vorgesehen ist.

Gemäß einer besonders bevorzugten Ausgestaltung ist der Aktuator zur Betätigung elektrisch beaufschlagbar, wodurch eine Erwärmung und daraus resultierend eine Formänderung der umfassten Formgedächtnislegierung eintritt.

Aktuatoren auf Basis eine Formgedächtnislegierung sind prinzipiell bekannt, zum technologischen Hintergrund wird auf die US 6,326,707 B1 verwiesen. Es hat jedoch sich herausgestellt, dass die Verwendung von eine Formgedächtnislegierung umfassenden Aktuatoren zur Betätigung von Luftsteuerklappen in besonderem Maße Vorteile mit sich bringt.

Insbesondere ist es von besonderem Vorteil, wenn die mittels der erfindungsgemäßen Einrichtung betätigte zumindest eine Steuerklappe den Kühlluftstrom im Frontbereich des Kraftfahrzeuges steuert.

Zweckmäßigerweise erfolgt eine Steuerung des Aktuators dabei auf Basis brennkraftmaschinentemperaturrelevanter Kenngrößen wie der Kühlmitteltemperatur, der Fahrgeschwindigkeit und/oder des Klimaanlagendruckes.

Ebenfalls als besonders vorteilhaft hat sich die Betätigung der zumindest einen Steuerklappe mittels der erfindungsgemäßen Einrichtung zur Steuerung eines Kühlluftstromes zur Temperierung eines Abgaskatalysators erwiesen.

Gemäß eines bevorzugten Ausführungsbeispiels erfolgt dabei eine Steuerung des Aktuators auf Basis der Abgastemperatur vor und/oder nach dem Abgaskatalysator und/oder der Fahrgeschwindigkeit.

Weiterhin ergeben sich sehr große Vorteile, wenn die zumindest eine mittels der erfindungsgemäßen Einrichtung betätigte Steuerklappe einen Luftstrom zur Temperierung einer Fahrzeugbremsanlage steuert, wobei zweckmäßigerweise eine Steuerung des Aktuators auf Basis einer Fahrzeugbremsenbetätigung, Fahrzeugverzögerung und/oder der Temperatur der Bremsanlage erfolgt.

Nachfolgend sind besonders zu bevorzugende Ausführungsbeispiele der Erfindung unter Bezugnahme auf Figuren näher erläutert, dabei zeigen schematisch und beispielhaft
- Figur 1: eine Einrichtung zur Betätigung von Lufteinlassklappen eines Kraftfahrzeuges zur Steuerung eines Kühlluftstromes,
- Figur 2: steuerbare Lufteinlassklappen im Frontbereich eines Kraftfahrzeuges sowie
- Figur 3: eine Einrichtung zur Betätigung von Lufteinlassklappen zur Steuerung eines Luftstromes zur Temperierung eines Abgaskatalysators.

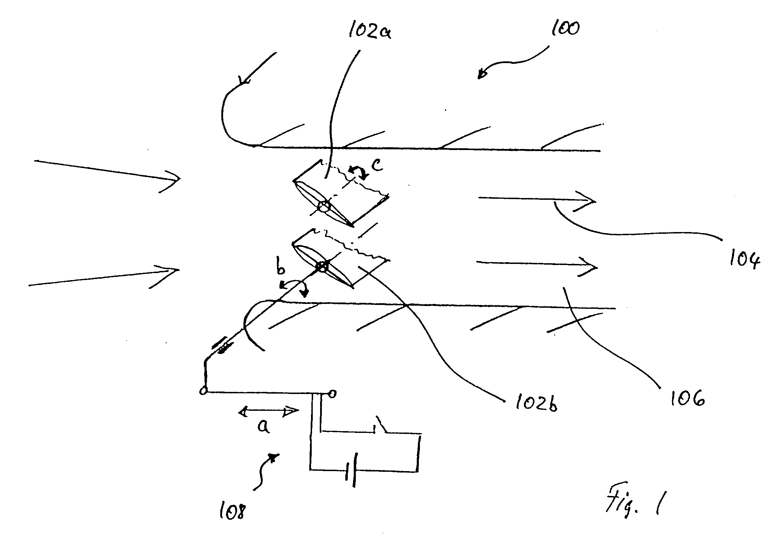

Figur 1 zeigt eine Einrichtung 100 zur Betätigung von Lufteinlassklappen 102a, 102b eines Kraftfahrzeuges zur Steuerung eines Kühlluftstromes 104. Die Luft strömt bei Fahrt staudruckbedingt passiv und/oder jederzeit aktiv mittels eines Lüfters bewegt durch einen Strömungskanal 106; der Strömungskanalquerschnitt ist mittels Klappen verschließ- bzw. öffenbar. Im vorliegenden Ausführungsbeispiel sind mehrere Drehklappen 102a, 102b lamellenartig angeordnet und um ihre Längsachse verschwenkbar, jedoch kann in einem anderen Ausführungsbeispiel insbesondere bei einem nur geringen Strömungskanalquerschnitt eine einzelne Klappe vorgesehen sein; bei den Klappen kann es sich gegebenenfalls auch um Schwenkklappen handeln. Der Antrieb der vorliegenden Klappen 102a, 102b erfolgt mittels einer Aktuatoreinrichtung 108, welche geeignet ist, eine lineare Bewegung entsprechend der Pfeilrichtung a zu erzeugen. Zwischen der Aktuatoreinrichtung 108 und den zu betätigenden Klappen 102a, 102b ist eine die lineare Bewegung in eine rotatorische Bewegung (vgl. Pfeilrichtung b) wandelnde Kinematik angeordnet, die Klappen 102a, 102b sind kinematisch zur gemeinsamen Bewegung verbunden, so dass eine Bewegung der Klappe 102b auch eine Bewegung der Klappe 102a entsprechend der Pfeilrichtung c bedingt.

Hervorzuheben ist die Ausgestaltung der Aktuatoreinrichtung 108, da diese besonders gut zur Betätigung von Luftsteuerklappen geeignet ist. Die Aktuatoreinrichtung 18 zur Erzeugung einer linearen Bewegung umfasst eine Mehrzahl von Untermodulen, welche benachbart angeordnet und relativ zueinander, parallel zu einer gemeinsamen Achse bewegbar sind. Die Untermodule weisen Drähte aus einer Formgedächtnislegierung (Smart Memory Alloy, SMA) auf, die sich im Wesentlichen linear und parallel zur gemeinsamen Achse erstrecken, jedes Untermodul ist mit dem entgegengesetzten Ende eines benachbarten Untermoduls verbunden. Die SMA-Drähte sind elektrisch miteinander verbunden, so dass durch Anlegen einer Spannung widerstandbedingt eine Erwärmung erreichbar ist, was ein Zusammenziehen der SMA-Drähte bewirkt. Aufgrund der seriellen mechanischen Verknüpfung der Untermodule mittels der SMA-Drähte erfolgt eine additive Verbindung der einzelnen Formänderungen zu einer deutlichen linearen Bewegung. Die Aktuatoreinrichtung 108 ermöglicht auf diese Weise bei sehr geringer Baugröße die Erzeugung einer sehr großen Bewegung, zudem ist des Verhältnis von Betätigungskraft zu Baugröße/Gewicht sehr vorteilhaft. Durch eine entsprechende Umsetzung dieses Aktuatorprinzips wird eine Aktuatoreinrichtung bereitgestellt, welche durch Anlegen einer Spannung linear verlänger- bzw. verkürzbar ist, in den Endlagen in vollständig ausgefahrenem bzw. verkürztem Zustand jedoch ohne nennenswerte Leistungsaufnahme festlegbar ist.

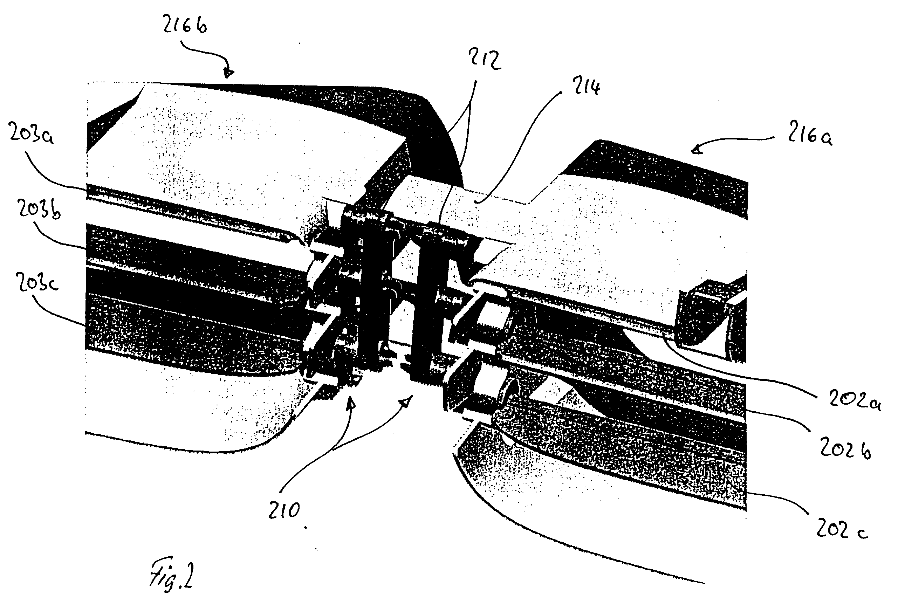

Steuerbare Lufteinlassklappen 202a, 202b, 202c, 203a, 203b, 203c im Frontbereich eines Kraftfahrzeuges sind in Figur 2 dargestellt. Es sind zwei rohrabschittsartige im Bereich 214 verbundene Strömungskanäle 216a, 216b gebildet, welche mittels der Klappen 202a, 202b, 202c bzw. 203a, 203b, 203c verschließ bzw. öffenbar sind; die Strömungskanäle 216a, 216b leiten im Frontbereich eines Kraftfahrzeuges Kühlluft zu einem Kühler des Brennkraftmaschinen Kühlkreislaufes. Die einzelnen Klappen 202a, 202b, 202c bzw. 203a, 203b, 203c sind jeweils um ihre Achsen schwenkbar gelagert, wobei jede Klappe zur Wandlung der linearen Aktuatorbewegung in eine rotatorische Schwenkbewegung einen Hebel 210 aufweist; um eine gemeinsame Bewegung aller Klappen zu erreichen, sind die Hebel 210 miteinander verbunden. Ein in vorliegender Figur nicht näher gezeigter Aktuator entsprechend der Beschreibung zur Figur 1 (108) greift im Bereich der Verbindungsstücke 212 an und betätigt zugleich alle Klappen 202a, 202b, 202c bzw. 203a, 203b, 203c. Gernäß eines anderen Ausführungsbeispiels ist eine getrennte Betätigung der Klappen 202a, 202b, 202c und 203a, 203b, 203c mittels zwei Aktuatoren vorgesehen, in diesem Fall ist beispielsweise durch öffnen nur eines Strömungskanals 216a oder 216b eine abgestufte Anströmung des Kühlers möglich. Einem weiteren Ausführungsbeispiel zufolge ist nur ein einziger Strömungskanal vorhanden, in diesem Fall erfolgt einen Betätigung nicht wie in der Figur gezeigt mittig zwischen den beiden Kanälen, sondern seitlich.

Der Aktuator wird mittels einer ebenfalls nicht näher gezeigten Steuereinrichtung gesteuert, welcher beispielsweise aus der Brennkraftmaschinensteuerung eine Vielzahl von relevanten Daten, betreffend etwa die Zündung, die Fahrzeuggeschwindigkeit, die Kühlmitteltemperatur, den Kühler, das Lastmoment der Klimaanlage insbesondere bei automatischen Wandlergetrieben die Getriebeöltemperatur, die Laststufe eines Elektroniklüfters, die Ansauglufttemperatur der Brennkraftmaschine, einen Anhänger und/oder die Bestromung eines Thermostates, zur Verfügung stehen. Ein Steuerung der Klappen 202a, 202b, 202c bzw. 203a, 203b, 203c erfolgt derart, dass Kühlluft nur dann durch die Strömungskanäle 216a, 216b strömt, wenn - bei hoher Temperatur - eine Anströmung des Kühlers notwendig ist. Sobald - bei geringer Temperatur - keine Anströmung erforderlich ist, werden die Klappen 202a, 202b, 202c bzw. 203a, 203b, 203c geschlossen, so dass der Luftwiderstand des Fahrzeuges niedrig gehalten wird; es ergeben sich insbesondere Kraftstoffverbrauchsvorteile.

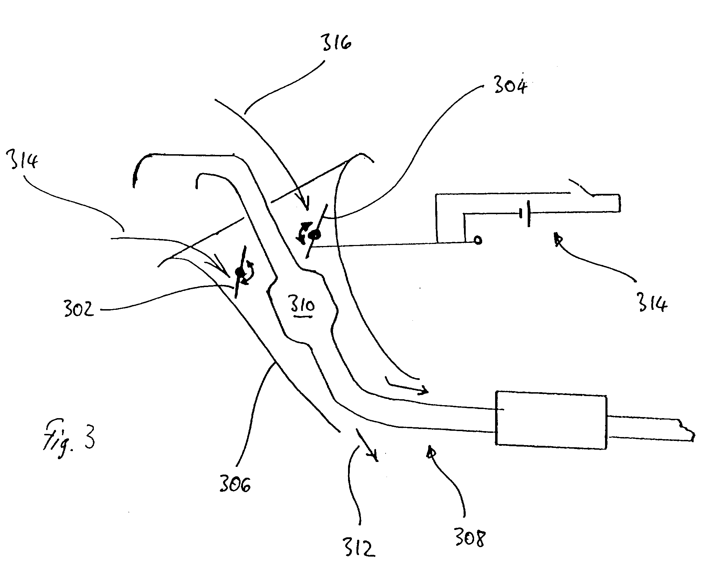

Ein weiteres Ausführungsbeispiel einer erfindungsgemäßen Luftklappensteuerung zeigt Figur 3 mit einer Einrichtung zur Betätigung von Lufteinlassklappen 302, 304 zur Steuerung eines Luftstromes 312, 314, 316 zur Temperierung eines Abgaskatalysators 310. Die Lufteinlassklappen 302, 304 werden jeweils mittels eines Aktuators gesteuert, wobei nur in der Figur nur der Aktuator 314 zur Steuerung der Lufteinlassklappe 304 dargestellt ist. Bezüglich des Aktuators 314 wird auf die Beschreibung des Aktuators 108 in Figur 1 verwiesen. Vorliegend ist mittels der Lufteinlassklappe 302 ein Warmluftstrom 314 zur Erwärmung des Katalysators 310 und mittels der Lufteinlassklappe 304 ein Kaltluftstrom zur Kühlung des Katalysators 310 steuerbar. Durch eine entsprechende Mischung der Luftströme 314 und 316 kann sehr genau die gewünschte Temperatur eingestellt werden, was insbesondere den Betrieb von DeNO_{X}-Katalysatoren wesentlich begünstigt, da diese die gewünschten hohen Konvertierungsraten in einem nur kleinen (hohen) Temperaturfenster erreichen. Wie bereits beschrieben erfolgt die Steuerung der Lufteinlassklappen 302, 304 auf Basis einen Mehrzahl von Daten beispielsweise aus der Brennkraftmaschinensteuerung, wobei im Falle der Katalysatortemperierung zudem Abgastemperatursensoren im Bereich vor, am und/oder nach dem Katalysator vorgesehen sind und entsprechende Daten an eine Steuereinrichtung liefern.

Aus Sicherheitsgründen ist die Steuerung der zumindest einen Lufteinlassklappe so ausgelegt, dass im Fehlerfall die Klappe öffnet bzw. eine Freischaltung erfolgt, so dass eine manuelle Betätigung möglich ist.

## Patentansprüche

1. Einrichtung zur Betätigung zumindest einer Steuerklappe (102a, 102b) zur Steuerung eines Luftstromes (104) bei einem Kraftfahrzeug mittels eines eine Formgedächtnislegierung umfassenden Aktuators (108).

2. Einrichtung nach Anspruch 1, **dadurch gekennzeichnet, dass** der Aktuator (108) zur Betätigung elektrisch beaufschlagbar ist, wodurch eine Erwärmung und daraus resultierend eine Formänderung der umfassten Formgedächtnislegierung eintritt.

3. Einrichtung nach Anspruch 1 oder 2, **dadurch gekennzeichnet, dass** die zumindest eine Steuerklappe (202a, 202b, 202c, 203a, 203b, 203c) im Frontbereich des Kraftfahrzeuges einen Kühlluftstrom steuert.

4. Einrichtung nach einem der Ansprüche 3, **dadurch gekennzeichnet, dass** eine Steuerung des Aktuators auf Basis brennkraftmaschinentemperaturrelevanter Kenngrößen erfolgt.

5. Einrichtung nach einem der Ansprüche 4, **dadurch gekennzeichnet, dass** eine Steuerung des Aktuators auf Basis der Kühlmitteltemperatur, der Fahrgeschwindigkeit und/oder des Klimaanlagendruckes erfolgt.

6. Einrichtung nach Anspruch 1 oder 2, **dadurch gekennzeichnet, dass** die zumindest eine Steuerklappe (302, 304) einen Luftstrom (312, 314, 316) zur Temperierung eines Abgaskatalysators (310) steuert.

7. Einrichtung nach Anspruch 6, **dadurch gekennzeichnet, dass** eine Steuerung des Aktuators auf Basis der Abgastemperatur vor und/oder nach dem Abgaskatalysator und/oder der Fahrgeschwindigkeit erfolgt.

8. Einrichtung nach Anspruch 1 oder 2, **dadurch gekennzeichnet, dass** die zumindest eine Steuerklappe einen Luftstrom zur Temperierung einer Fahrzeugbremsanlage steuert.

9. Einrichtung nach Anspruch 8, **dadurch gekennzeichnet, dass** eine Steuerung des Aktuators auf Basis einer Fahrzeugbremsenbetätigung, Fahrzeugverzögerung und/oder der Temperatur der Bremsanlage erfolgt.
